**Europäisches Patentamt**

**European Patent Office**

**Office européen des brevets**

(11) Veröffentlichungsnummer: **0 413 101 A1**

# EUROPÄISCHE PATENTANMELDUNG

(21) Anmeldenummer: 90110955.3

(22) Anmeldetag: 09.06.90

(51) Int. Cl.⁵: **B22D 11/126**, B23K 7/00

(30) Priorität: 09.08.89 DE 3926278

(43) Veröffentlichungstag der Anmeldung:
20.02.91 Patentblatt 91/08

(84) Benannte Vertragsstaaten:
**DE FR GB IT**

(71) Anmelder: **MESSER GRIESHEIM GMBH**
**Hanauer Landstrasse 330**
**D-6000 Frankfurt/Main 1(DE)**

(72) Erfinder: **Grohmann, Paul**
**Erlaufstrasse 23**
**A-2344 Maria-Enzerdorf(AT)**

(54) Verfahren zum Querteilen von metallischen Werkstücken.

(57) Damit bei einem Verfahren zum Querteilen von metallischen Werkstücken, wie Brammen, stranggegossene Knüppel und Vorblöcke, bei dem der Trennschnitt durch ein tiefkaltes, flüssiges, unter hohem Druck aus einer Düse austretendes Schneidmittel, insbesondere flüssigem Sauerstoff erfolgt, die Mitlaufstrecke von Werkstück und Schneiddüse in Werkstücklängsrichtung entfallen kann, wird das Werkstück (10) in Längsrichtung (16) und die Düse (12) unter einem spitzen Anstellwinkel (α) zur Längsrichtung (16) in Querrichtung (18-18) bewegt.

Fig. 1

Fig. 2

## VERFAHREN ZUM QUERTEILEN VON METALLISCHEN WERKSTÜCKEN

Die Erfindung betrifft ein Verfahren zum Querteilen von metallischen Werkstücken nach dem Oberbegriff des Anspruches 1.

Beim Schneiden mit einem Hochdruckflüssigsauerstoffstrahl wie es z. B. aus der DE-PS 35 43 657 bekannt ist, werden viel höhere Schnittgeschwindigkeiten erreicht, als mit dem konventionellen Brennschneidverfahren. Dadurch ist es z. B. auch möglich, beim Querteilen von Brammen die Mitlaufstrecke der Schneiddüse in Brammenlängsrichtung auf die jeweilige Brammenbreite zu verkürzen (s. o. Zeitschrift BHM; 134 Jg. (1989), Heft 5, Seiten 133 - 136 "LOXJET$^R$ - ein autogenes Brennschneidverfahren für höchste Schnittgeschwindigkeiten", Untertitel 4. Anwendungsgebiete für das LOXJET$^R$-Verfahren.

Dabei wird - wie bei den Strangbrennschneidmaschinen mit gasförmigem Sauerstoff - die Schneideinrichtung mit der Bramme gekoppelt und entlang der Mitlaufstrecke Bramme sowie Schneideinrichtung in Längsrichtung bewegt. Gleichzeitig erfolgt eine Querbewegung des Brenners. Nach Beendigung des Trennschnittes wird die gesamte Schneideinrichtung wieder zum Beginn der Mitlaufstrecke zurückgefahren. Diese Verfahrensweise erfordert Antriebe sowohl für die Bewegung in Längs- als auch in Querrichtung.

Aufgabe der vorliegenden Erfindung ist ein Schneidverfahren ohne Mitlaufstrecke zu schaffen und eine Reduzierung der damit verbundenen Nebenzeiten bei gleichzeitiger Vereinfachung der erforderlichen Schneidvorrichtung.

Diese Aufgabe wird durch die kennzeichnenden Merkmale des Ansprüches 1 gelöst.

Vorteilhafte Weiterbildungen der Erfindung sind in den Ansprüchen 2 bis 4 angegeben.

Durch die unter einem spitzen Anstellwinkel zur Bewegungsrichtung des Werkstückes erfolgende Querbewegung des Hochdruckflüssigsauerstoffstrahles wird es vorteilhaft möglich, die Düse gegenüber der Längsbewegung des Werkstückes stationär anzuordnen, da der Weg, den das Werkstück während des Schneidens zurücklegt, durch die Schrägstellung kompensiert und somit ein gerader Trennschnitt erreicht wird. Da die Mitlaufstrecke von Bramme und Schneideinrichtung somit Null ist, entfallen Längswagen sowie Längsantrieb und Koppeleinrichtung. Auch fallen keine Nebenzeiten zum Rücktransport der Schneideinrichtung an den Beginn der Mitlaufstrecke an, es ist lediglich ein Rückpendeln bzw. Rückfahren des Schneidbrenners erforderlich. Diese Rückbewegungen können vorteilhaft auch noch entfallen, wenn nach Beendigung eines ersten Schnittes für einen zweiten Schnitt der Vorwärmbrenner um 180° gedreht und danach Vorwärm- und Schneidbrenner um 180° - 2 α zurückgedreht werden. Diese Verfahrensweise ist deshalb besonders günstig, da kein Abschalten des Hochdruckflüssigsauerstoffstrahles erforderlich ist.

Die Größe des Anstellwinkels wird dabei in Abhängigkeit von der Geschwindigkeit des Werkstückes sowie der Schnittgeschwindigkeit, die von Art und Abmessungen des Werkstückes abhängig ist, eingestellt.

Zwei Ausführungsbeispiele von Vorrichtungen zur Durchführung des erfindungsgemäßen Verfahrens sind in den Zeichnungen dargestellt.

Es zeigen

Fig. 1 + 2 Schneidvorrichtung mit Pendelbrenner

Fig. 3 Schneidvorrichtung mit Brennerquerwagen

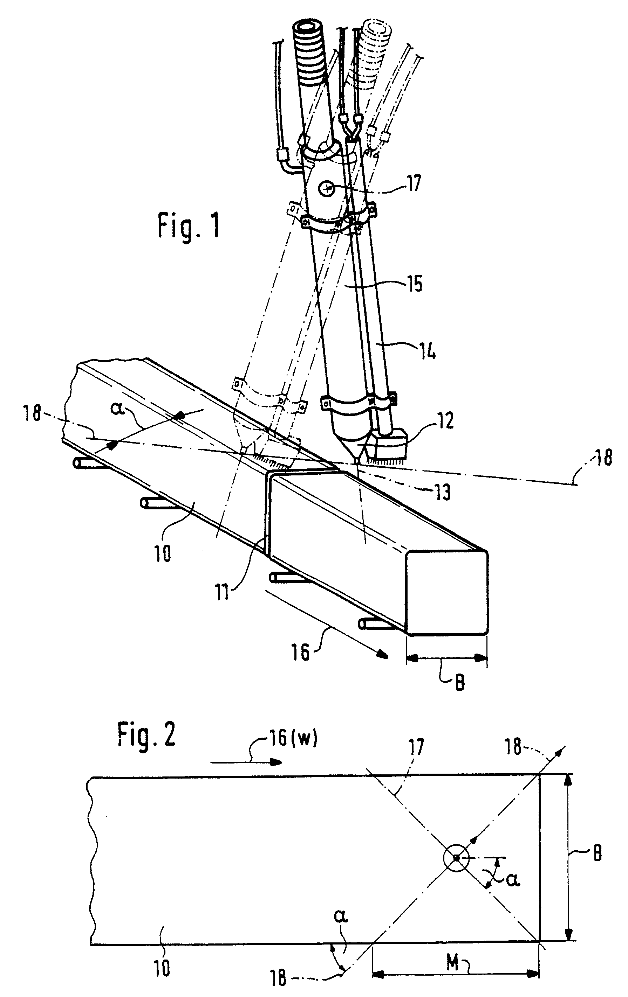

In den Fig. 1 und 2 ist ein z. B. mit Rollen unterstützter querzuteilender Stranggußknüppel mit 10 bezeichnet, wobei ein Trennschnitt 11 durch ein aus einer Düse 12 austretender Hochdruckflüssigsauerstoffstrahl 13 erzeugt wird. Ein Vorwärmbrenner ist mit 14 gekennzeichnet. Die Düse 12 ist an einem Brenner 15 befestigt. Dieser ist um eine mittig über dem Knüppel 10 und unter einem spitzen Anstellwinkel α schräg zur Längsrichtung 16 (= Werkstückbewegungsrichtung) angeordnete Schwenkachse 17 pendelbar (s. insbesondere Fig. 2). Die Pendelebene ist mit 18-18 bezeichnet.

Der Knüppel 10 hat beispielsweise eine Dicke (D)/Breite (B) von jeweils 200 mm. Bei einer Schnittgeschwindigkeit von V = 1500 mm/min sowie einer Werkstückbewegung in Längsrichtung 16 und einer Geschwindigkeit von W = 1500 mm/min ergibt sich eine theoretische Mitlaufstrecke M von 200 mm. Der Anstellwinkel α ergibt sich dann aus $\tan \alpha = \frac{B}{M} = 1 = 45°$.

Der Anstellwinkel α des Pendelbrenners 15 ist einstellbar. Dadurch können auf einfache Weise Änderungen der Werkstückgeschwindigkeit bei kontinuierlich austretenden Gußsträngen (=Gießgeschwindigkeit) ausgeglichen werden.

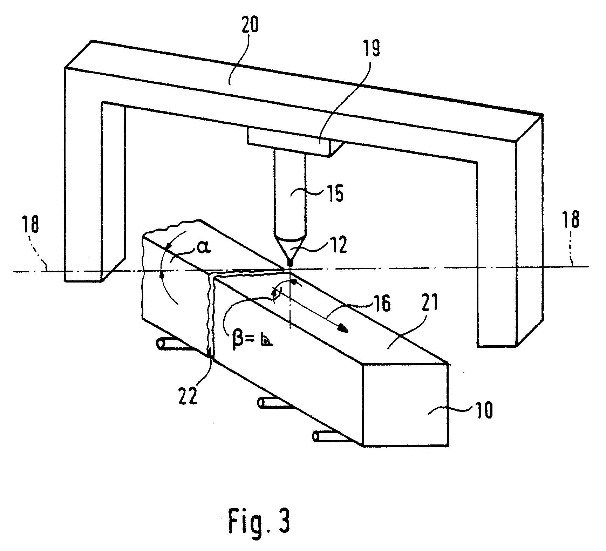

Beim Ausführungsbeispiel nach Fig. 3 ist die Düse 12 an einem Brenner 15 befestigt, der in einem Querlaufwagen 19 verfahrbar (Ebene 18-18) ist. Der Laufwagen 19 ist in einem Portal 20 gehalten, das unter dem Anstellwinkel α schräg zur Längsrichtung 16 das Werkstück 10 überspannt. Mit dieser Vorrichtung wird, da der Brenner 15 und die Düse 12 und damit der Schneid strahl 13 stets in einem rechten Winkel β über die Werkstückoberfläche 21 geführt werden, eine zur Werkstückoberfläche 21 rechtwinklige Trennschnittfläche 22 erreicht.

**Ansprüche**

1. Verfahren zum Querteilen von metallischen Werkstücken, wie Brammen, stranggegossene Knüppel und Vorblöcke, bei dem der Trennschnitt durch ein tiefkaltes, flüssiges, unter hohem Druck aus einer Düse austretendes Schneidmittel, insbesondere flüssigem Sauerstoff erfolgt,
dadurch gekennzeichnet,
daß das Werkstück (10) in Längsrichtung (16) und die Düse (12) unter einem spitzen Anstellwinkel ($\alpha$) zur Längsrichtung (16) in Querrichtung (18-18) bewegt wird.

2. Verfahren anch Anspruch 1,
dadurch gekennzeichnet,
daß der Anstellwinkel ($\alpha$) in Abhängigkeit von der Geschwindigkeit des Werkstückes sowie der Schnittgeschwindigkeit des Schneidmittels eingestellt wird.

3. Vorrichtung zur Durchführung des Verfahrens nach Anspurch 1 oder 2,
dadurch gekennzeichnet,
daß die Düse (12) an einem Pendelbrenner (15) befestigt ist, der um eine mittig über dem Werkstück (16) und unter dem Anstellwinkel ($\alpha$ schräg zur Längsrichtung (16) angeordnete Schwenkachse (17) pendelbar ist.

4. Vorrichtung zur Durchführung des Verfahrens nach Anspruch 1 oder 2,
dadurch gekennzeichnet,
daß die Düse (12) an einem Brenner (15) befestigt ist, der in einem Querlaufwagen (19) verfahrbar angeordnet ist, wobei der Querlaufwagen (19) in einem Portal (20) gehalten ist, das unter dem Anstellwinkel ($\alpha$) schräg zur Längsrichtung (16) das Werkstück (10) überspannt.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 034 811 (I.P.U. LTD.)<br>* Seite 7, Zeilen 8-12; Anspruch 1; Figuren 1,2 *<br>- - - | 1,4 | B 22 D 11/126<br>B 23 K 7/00 |
| D,A | DE-C-3 543 657 (MESSER GRIESHEIM GMBH)<br>* Anspruch 1 *<br>- - - | 1 | |
| D,A | BHM Band 134, Nr. 5, 1989, Seiten 133-136, Wien, AT; P. GROHMANN et al.: "LOXJET R, ein autogenes Brennschneidverfahren für höchste Schnittgeschwindigkeiten"<br>* Seite 136, linke Spalte, Zeile 38 - rechte Spalte, Zeile 37; Figur 8 *<br>- - - - - | 1 | |

| RECHERCHIERTE SACHGEBIETE (Int. Cl.5) |
|---|
| B 22 D<br>B 23 K |

Der vorliegende Recherchenbericht wurde für alle Patentansprüche erstellt

| Recherchenort | Abschlußdatum der Recherche | Prüfer |
|---|---|---|
| Berlin | 16 November 90 | WUNDERLICH J E |